# EUROPEAN PATENT APPLICATION

(11) **EP 2 053 577 A1**
(43) Date of publication of application: **29.04.2009**
(21) Application number: 08163680.5
(22) Date of filing: 04.09.2008
(51) Int. Cl.: G09B 1/00, A63F 9/00

(54) **Learning device and method thereof**

(30) Priority: 04.09.2007 US 969768 P
(71) Applicant: G-Time Electronic Co., Ltd., Siangshan District Hsinchu City 300 (TW)
(72) Inventor: Hou, Tien-Fa, Hsinchu City 300 (TW)
(74) Representative: Epping - Hermann - Fischer

(57) **Abstract**

The present invention discloses a learning device and its method. The learning device comprises a platform, a plurality of puzzle pieces, a plurality of reading units, a storage unit and a processing unit. Each puzzle piece includes a pattern and at least one ID code. The reading unit is used for reading the ID code. The storage unit is used for storing a plurality of records of learning information related to the patterns of the puzzle pieces. The processing unit selects one of the learning information, generates a hint signal of the selected learning information to hint a user about a specified position of placing the puzzle piece on the platform, scans the reading units to obtain the read ID code to determine the position of the puzzle piece placed on the platform, compares the determined position with the specified position, and generates a response signal according to a determining result.

## Description

### BACKGROUND OF THE INVENTION

### Field of the Invention

The present invention relates to a learning device, and more particularly to a learning device with an automatic determining function and its method.

### Description of the Related Art

At present, puzzle games are a very popular toy, particularly for children, and puzzle games can help the intellectual development of children, and word cards are another way for children to learn how to read and memory from pictures or texts on the word cards.

In addition to the word cards, there are Japanese word card tools as disclosed in TW R.O.C. Pat. No. 00475161, and the shape of the word cards varies according to the situation whether or not there is a declension of parts of speech, dependent words and independent words. For a declension of parts of speech, a sharp tapered rear end of the word card indicates there is a change at the end of a sentence; for a conjugation of parts of speech, a flat rear end of the word card indicates that there is no change at the end of a sentence; for parts of speech of an independent word, a flat front end of the word card indicates that the word can exist independently; and for parts of speech of a dependent word, an indented front end of the word card indicates that the dependent word must be appended to an independent word. Word cards include Choice of Word card having a flat front end and a sharp tapered rear end; noun and pronounce word card, having both flat front and rear ends; adverb card, having both flat and rear ends with four arc comers; and an auxiliary word card, having an indented front end and sharp tapered rear end, wherein the sharp tapered rear end indicates an auxiliary verb, and a flat angle indicates an auxiliary word. During teaching, different word cards are used for writing single words, a combination or permutation of the words to teach single words, contexts, sentence structures, conjugations and connection relations, etc.

In addition, TW R.O.C. Pat. No. 00370230 also disclosed a spelling and phonetic fun word learning card, comprising a radical card and an appropriate quantity of component cards. The radical card is divided into three portions respectively: a radical portion, a blank portion and a phonetic portion, and the radical portion is slightly protruded and having a Chinese radical printed on a surface of the radical portion, and the phonetic portion is disposed on another side of the radical portion and having a plurality of frames arranged thereon, and each frame has a phonetic symbol for spelling a word by the radical. The component card has the same quantity of frames on the radical card, and having a components disposed on a side of the component card for spelling a complete word by the radical, and a frame opening is disposed at a different position of each component card for showing the phonetic symbols on the frames of each radical card respectively. Therefore, different words can be spelled out by using the puzzle method, and correct phonetic symbols are given for a particular word, so as to give more fun to the learning of spelling and phonetic sounds through this game.

However, the word cards or learning cards in prior art only come with pictures and texts for children to read and memorize, but these cards does not have interactive learning, listening, talking, reading and writing effects.

### Summary of the Invention

Therefore, it is a primary objective of the present invention to provide a learning device and its method to improve the learning efficiency of users.

To achieve the foregoing objective, the present invention provides a learning device comprising a platform, a plurality of puzzle pieces, a plurality of reading units, a storage unit and a processing unit. Each puzzle piece comprises a pattern and at least one ID code, and the reading units are provided for reading the ID codes respectively, and the storage unit is provided for storing a plurality of records of learning information, and the learning information relates to a pattern of the puzzle pieces, and the processing unit is provided for selecting at least one of the learning information, generating a hint signal of the selected learning information to hint a user about a specified position for placing the puzzle piece on the platform, scanning the reading units to obtain the read ID code to determine the position wherein the puzzle piece is placed on the platform, comparing the determined position with the specified position, and generating a response signal according to a determining result.

In addition, the present invention further provides a learning method comprising the steps of: providing a platform and a plurality of puzzle pieces, wherein each puzzle piece has a pattern and at least one ID code; providing a plurality of records of learning information, wherein the learning information is related to a pattern of the puzzle piece; selecting at least one of the selected learning information; generating a hint signal of the selected learning information to hint a user about a specified position of placing the puzzle piece on the platform; using a plurality of reading units to read an ID code of the puzzle piece; scanning the reading units to detect a position of the puzzle piece placed on the platform; determining whether or not the detected position matches the specified position; and generating a response signal according to a determining result.

The learning device and its method of the present invention have the following advantages:
(1) In this learning device, the processor is provided for performing a determining automatically to improve the convenience of using the learning device.
(2) In this learning device, the processor is provided for producing interactive messages to improve the learning efficiency of the learning device.

### BRIEF DESCRIPTION OF THE DRAWINGS

The subject matter regarded as the invention is particularly pointed out and distinctly claimed in the concluding portion of the specification. The invention, both as to device and method of operation, together with features and advantages thereof may best be understood by reference to the following detailed description with the accompanying drawings in which:
FIG. 1 is a functional block diagram of a learning device of the present invention;
FIG. 2A is a schematic view of giving a hint signal by a learning device in accordance with a preferred embodiment of the present invention;
FIG. 2B is a schematic view of placing a puzzle piece at a correct position of a learning device in accordance with a preferred embodiment of the present invention;
FIG. 2C is a schematic view of placing a puzzle piece at a wrong position of a learning device in accordance with a preferred embodiment of the present invention;
FIG. 2D is a schematic view of a puzzle piece placed at a correct position of a learning device in accordance with a preferred embodiment of the present invention;
FIG. 2E is a perspective view of a learning device in accordance with a preferred embodiment of the present invention;
FIG. 2F is a schematic view of an accommodating space of a learning device in accordance with a preferred embodiment of the present invention; and
FIG. 3 is a flow chart of a learning method of the present invention.

### DETAILED DESCRIPTION OF THE PREFERRED EMBODIMENTS

While the specifications describe at least one embodiment of the invention considered best modes of practicing the invention, it should be understood that the invention can be implemented in many ways and is not limited to the particular examples described below or to the particular manner in which any features of such examples are implemented.

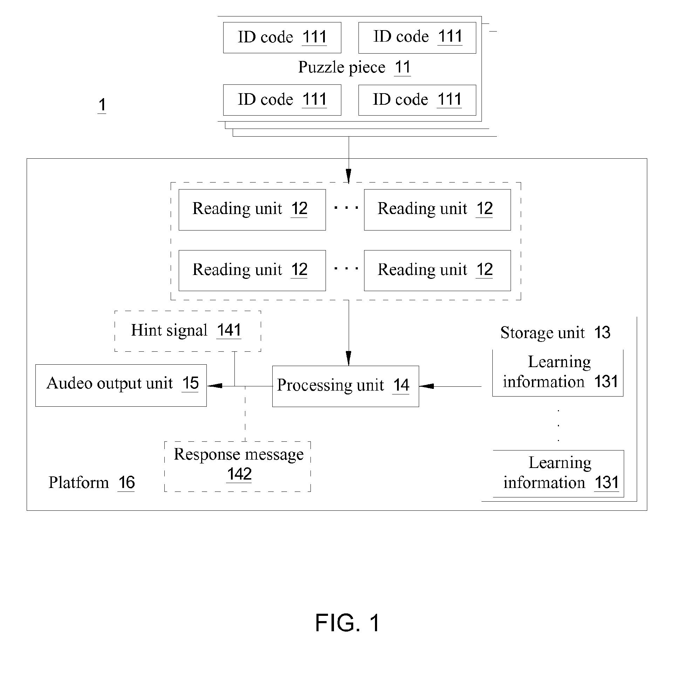

With reference to FIG. 1 for a functional block diagram of a learning device in accordance with a preferred embodiment of the present invention, the learning device 1 comprises a plurality of puzzle pieces 11, a plurality of reading units 12, a storage unit 13, a processing unit 14, an audio output unit 15 and a platform 16. The reading units 12, storage unit 13, processing unit 14 and audio output unit 15 are installed on the platform 16. Each puzzle piece 11 has an ID code 111 and a pattern recognized by users. In this preferred embodiment, the ID code 111 of each puzzle piece 11 is disposed at one of the four corners of the puzzle piece 11.

The reading units 12 are used for reading the ID code 111. The reading units 12 are preferably arranged in an array. The ID code 111 is a RFID tag or a code, and the code has a content composed of a text, a numeral, a symbol, a text and a numeral, a text and a symbol, a symbol and a numeral, or a text, a symbol and a numeral. The reading unit 12 is a RFID reader or a code reader, and the code reader is an image reader, a barcode reader or an optical reader. If the puzzle piece 11 has a plurality of ID codes 111, and the ID codes 111 are disposed on the same side of the puzzle piece 11, then the processing unit 14 can determine the disposing direction of the puzzle piece 11 according to the read ID code 111.

It is noteworthy to point out that if a code is used as the ID code 111 on the puzzle piece 11, the code can be printed onto the puzzle piece 21 or an object with the code is adhered onto the puzzle piece 21, such that a code reader can be used for reading the code on the puzzle piece 11. Therefore, the code described here is a noun.

The storage unit 13 is provided for storing a plurality of records of learning information 131, and the processing unit 14 selects at least one learning information 131 from the storage unit 13, and generates a hint signal 141 of the selected learning information 131 and plays the hint signal 141 through an audio output unit 15 to give a hint to users about the specified position of placing the puzzle piece 11 on the platform 16, and the processing unit 14 scans the reading units 12 to obtain the ID code 111 read by the reading unit 12 to determine the position of the puzzle piece 11 placed on the platform 16, and compares the determined position with the specified position, and generates a response signal 142 according to a determining result, and outputs the response signal 142 to hint the users through the audio output unit 15.

The pattern includes a pattern and a text, disposed on both sides of the puzzle piece 11, and the pattern gives a puzzle function to the puzzle piece 11, and the text gives a calligraphic function to the puzzle piece 11.

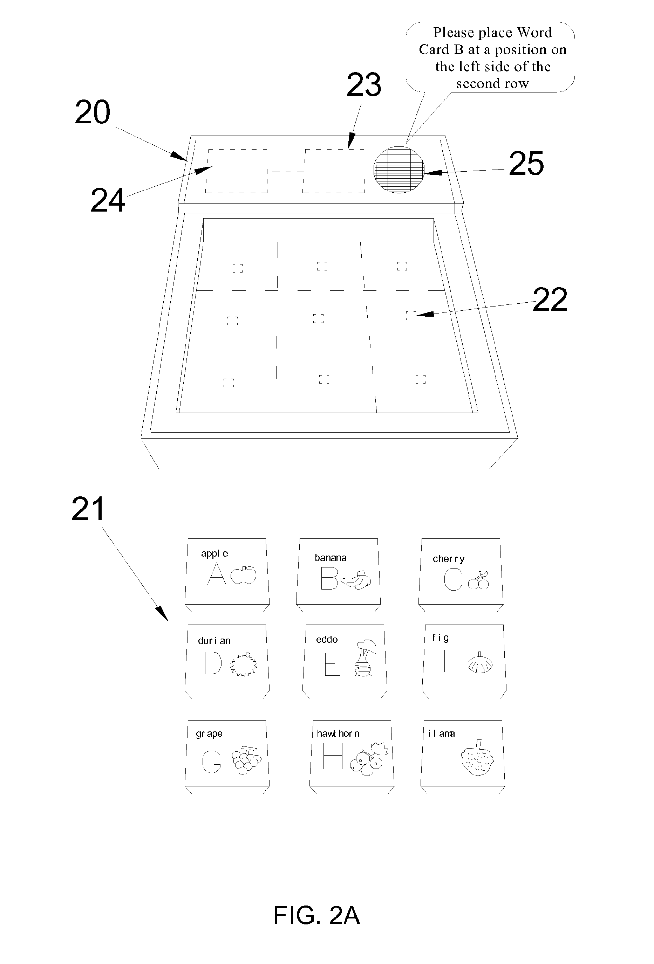

With reference to FIGS. 2A to 2E for schematic view of a preferred embodiment of the present invention, FIG. 2A shows a schematic view of a preferred embodiment of the present invention. In FIG. 2A, the learning device is a learning machine 20 in this embodiment, and the learning machine 20 includes a storage unit 23 for storing a plurality of records of learning information. In addition, the learning machine 20 comes with a plurality of puzzle pieces 21, and the surface of each puzzle piece 21 has a word card pattern, and each puzzle piece 21 has a RFID tag (not shown in the figure), and the learning machine 20 includes a plurality of RFID readers 22 arranged in array method for reading the RFID tag of each puzzle piece 21. If the learning machine 20 is turned on, the processor 24 selects any one of the learning information and plays a hint signal of the selected learning information from the speaker 25 to let a user know the required position of placing the puzzle pieces 21 and the correct position of each puzzle piece 21 from the learning information at that time, so that the user can follow the hint signal to arrange the puzzle pieces 21.

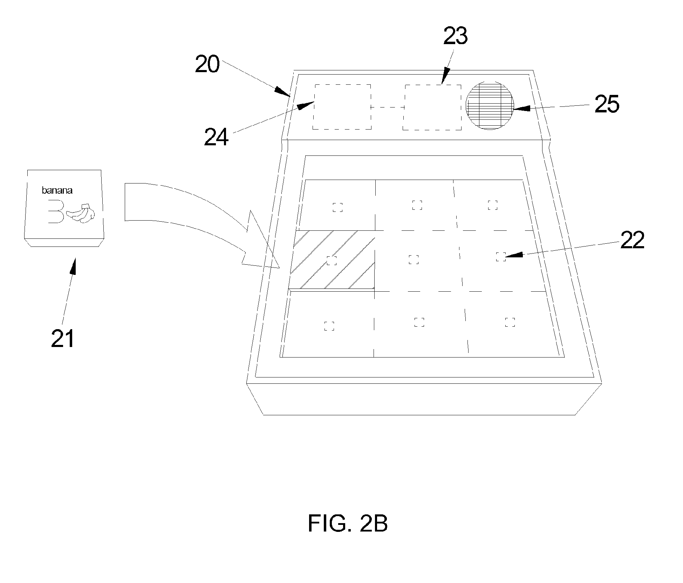

If the learning machine 20 plays a hint signal "Please place Word Card B at a position on the left side of the second row" from the speaker 25 and the user places the puzzle piece 21 at the position accordingly, the learning machine 20 will use the plurality of RFID readers 22 to read the RFID tag of the Word Card B placed by the user, and the processor 24 will scan these RFID readers 22 to obtain the data of the read RFID tag so as to determine the position of the puzzle piece 21 placed on the learning machine 20. If there is a plurality of puzzle pieces 21 placed on the learning machine 20, then the processor 24 will determine the way of arranging the puzzle pieces 21. The processor 24 will compare the read arrangement method and the predetermined arranged position in the learning information to produce a determining result as shown in FIG. 2B.

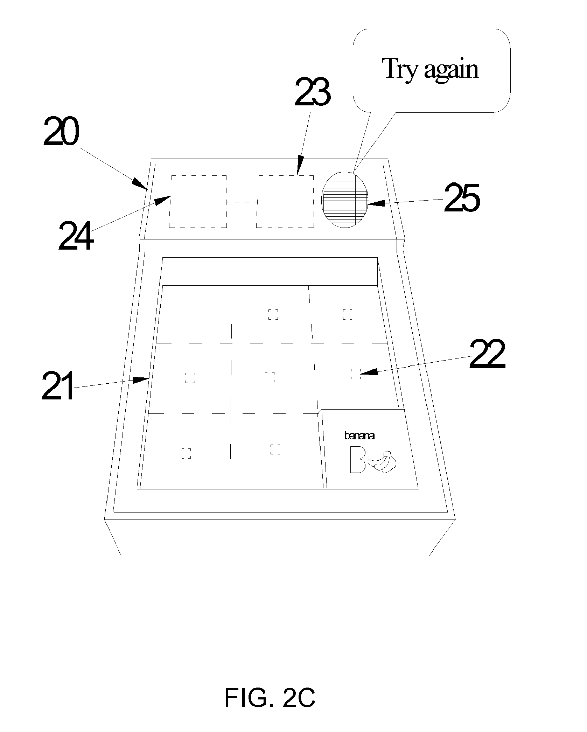

In FIG. 2C, if there is an error in the determining result, the processor 24 will output an error message to a speaker 25, and the speaker 25 will play the error message in sound, such as an encouraging word and repeat the hint signal like "Try again." or "Don't give up." to encourage the users to have confidence and arrange the puzzle pieces 21 again.

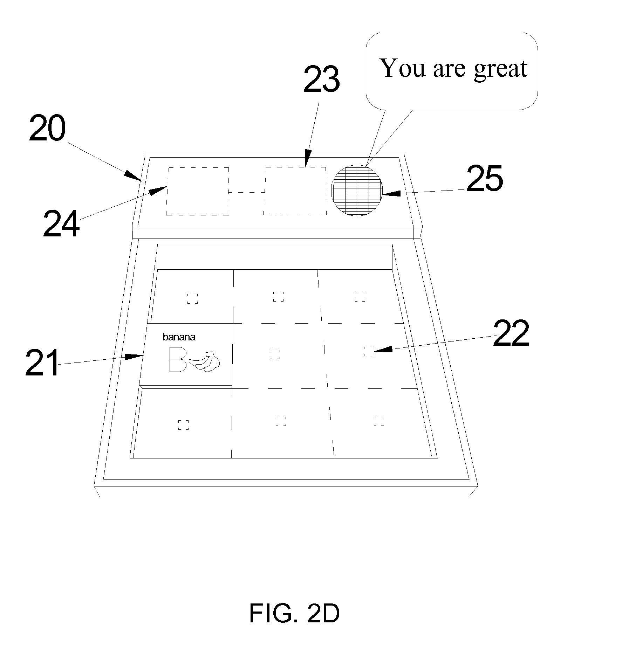

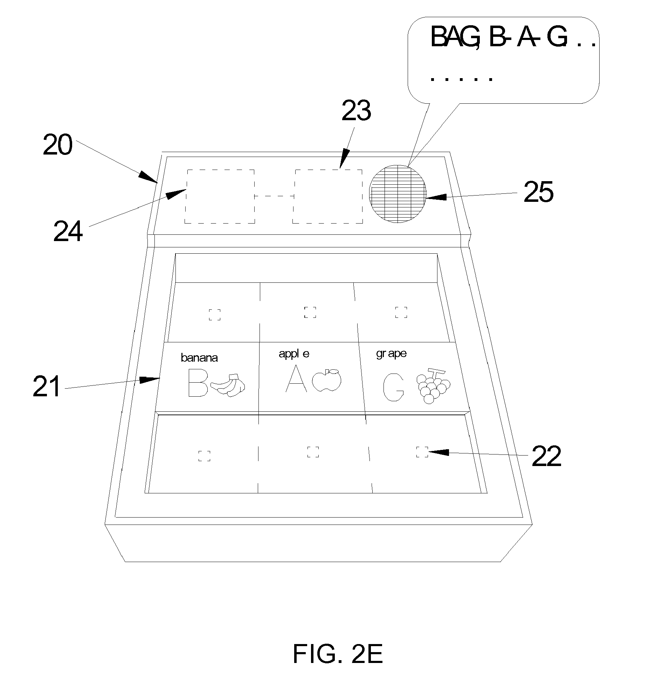

In FIG. 2D, if the determining result is correct, the processor 24 will output a correct message to the speaker 25, so that the speaker 25 will play a complement in sound and teach users to learn words such as "You are great.", "You are terrific", "You are smart." or similar encouragements for encouraging the user. The learning machine 20 can further play a next hint signal until the user can complete arranging the puzzle pieces 21 according to all hint signals given at that time, and then the learning machine 20 can teach users about the pronunciation, and a single word, a short sentence related to the characters of the words on the word card arranged by the user on the learning machine 20 as shown in FIG. 2E, so as to improve the utility of the present invention.

A pattern layer is disposed at another side of the puzzle piece 21, such that when the puzzle pieces 21 are arranged, pictures can be combined with the pattern layer in each puzzle piece 21, and the puzzle piece 21 is combined to form a picture, the processor 24 can tell a short story according to the patterns to inspire the user's thinking ability.

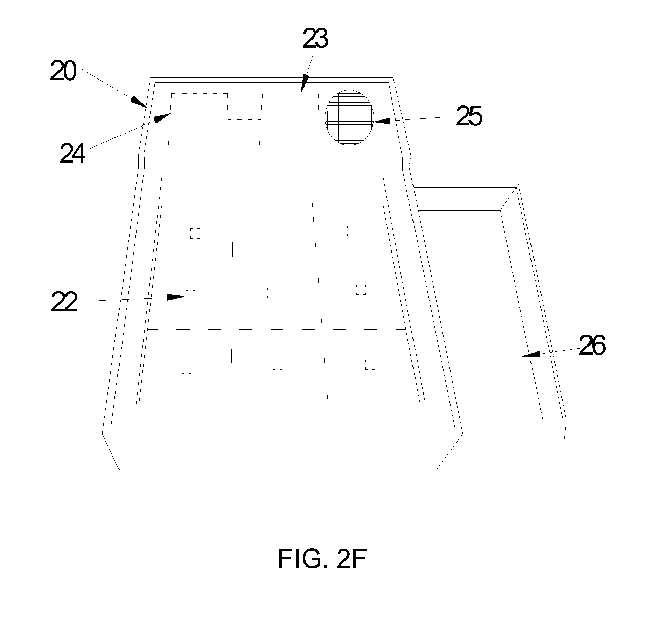

In FIG. 2F, the learning machine 20 includes a containing space 26 at its lateral side for accommodating the puzzle pieces (not shown in the figure). If a user completes a learning session, the user can put all puzzle pieces into the containing space 26 of the learning machine 20, and such arrangement can train users to establish a good habit of putting things back to where they are after using them.

In the foregoing embodiment, a code can be substituted by a RFID tag, and the learning machine 20 can further has a code reader such as an image reader, a barcode reader or an optical reader for reading the code on the puzzle piece 21.

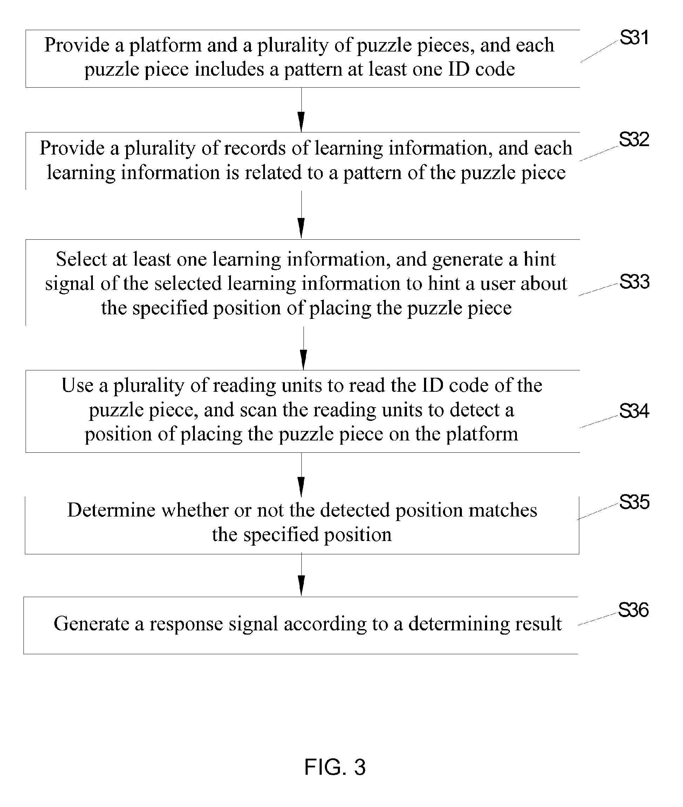

With reference to FIG. 3 for a flow chart of a learning method in accordance with the present invention, the method comprises the following steps:
Step S31: Provide a platform and a plurality of puzzle pieces, and each puzzle piece includes a pattern at least one ID code. Both sides of the puzzle piece have a pattern layer and a word card layer respectively, and the pattern layer gives a puzzle function to the puzzle piece, and the word card layer gives a calligraphic function to the puzzle piece. The ID code is a RFID tag or a code, and the code has a content composed of a text, a numeral, a symbol, a text and a numeral, a text and a symbol, a symbol and a numeral, or a text, a symbol and a numeral.
Step S32: Provide a plurality of records of learning information, and each learning information is related to a pattern of the puzzle piece. If there is a word card on the surface of the puzzle piece, the letters on the puzzle piece can be used to make a single word.
Step S33: Select at least one learning information, and generate a hint signal of the selected learning information to hint a user about the specified position of placing the puzzle piece.
Step S34: Use a plurality of reading units to read the ID code of the puzzle piece, ad scan the reading units to detect a position of placing the puzzle piece on the platform.
Step S35: Determine whether or not the detected position matches the specified position.
Step S36: Generate a response signal according to a determining result.

The reading unit is a RFID reader or a code reader, and the code reader is an image reader, a barcode reader or an optical reader.

While the invention has been described by way of example and in terms of a preferred embodiment, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

## Claims

1. A learning device, comprising:
a platform;
a plurality of puzzle pieces, each puzzle piece having a pattern and at least one ID code;
a plurality of reading units, installed at the platform, for reading the ID codes respectively;
a storage unit, installed at the platform, for storing a plurality of records of learning information, and the learning information relating to the patterns of the puzzle pieces; and
a processing unit, installed at the platform, for selecting at least one of the learning information, and generating a hint signal of the selected learning information to hint users to place the puzzle piece at a specified position of the platform, and then scanning the reading units to obtain the read ID code to determine the position of placing the puzzle piece on the platform, and comparing the determined position with the specified position, and generating a response signal according to a determining result.

2. The learning device of claim 1, wherein the patterns of the puzzle pieces include a pattern layer or a word card layer.

3. The learning device of claim 1, wherein the ID code is a RFID tag or a code.

4. The learning device of claim 3, wherein the code is composed of a content selected from the collection of a text, a numeral, a symbol, a text and a numeral, a text and a symbol, a symbol and a numeral, and a text, a symbol and a numeral.

5. The learning device of claim 1, wherein the reading unit is a RFID reader or a code reader.

6. The learning device of claim 5, wherein the code reader is an image reader, a barcode reader or an optical reader.

7. The learning device of claim 1, wherein the platform further includes an accommodating space for accommodating the puzzle pieces.

8. A learning method, comprising the steps of:
providing a platform and a plurality of puzzle pieces, and each puzzle piece having a pattern and at least one ID code;
providing a plurality of records of learning information, which are related to the patterns of the puzzle pieces;
selecting at least one of the learning information and generating a hint signal of the selected learning information to hint a users to place the puzzle piece at a specified position of the platform;
using a plurality of reading units to read an ID code of the puzzle piece, and scanning the reading units to detect the position of the puzzle piece on the platform;
determining whether or not the detected position matches with the specified position; and
generating a response signal according to a determining result.

9. The learning method of claim 8, wherein the puzzle piece has a pattern layer and a word card layer disposed on both sides of the puzzle piece respectively.

10. The learning method of claim 8, wherein the ID code is a RFID tag or a code.

11. The learning method of claim 10, wherein the code is composed of a content selected from the collection of a text, a numeral, a symbol, a text and a numeral, a text and a symbol, a symbol and a numeral, and a text, a symbol and a numeral.

12. The learning method of claim 8, wherein the reading unit is a RFID reader or a code reader.

13. The learning method of claim 12, wherein the code reader is an image reader, a barcode reader or an optical reader.
